# EUROPEAN PATENT APPLICATION

(11) **EP 4 749 501 A1**
(43) Date of publication of application: **27.05.2026**
(21) Application number: 25214586.7
(22) Date of filing: 10.11.2025
(51) Int. Cl.: G06F 21/85, G06F 21/53

(54) **APPARATUS AND METHOD FOR INTEGRATED DEVICES WITH TRUSTED EXECUTION ENVIRONMENT (TEE) CONFIDENTIAL COMPUTE SUPPORT**

(30) Priority: 20.11.2024 US 202463723026 P; 28.03.2025 US 202519094322
(71) Applicant: INTEL Corporation, Santa Clara, CA 95054 (US)
(72) Inventor: SOOD, Kapil, Washougal, 98671 (US); ALTMAN, Asher, Bedford, 01730 (US); VAKHARWALA, Rupin H., Hillsboro, 97123 (US); AHARON, Arie, Portland, 97229 (US); THOMAS, Tessil, Cambridge, CB1 3LE (GB); SHARMA, Shalini, Folsom, 95630 (US); GEISLER, Eric, Hillsboro, 97124 (US); SRINIVAS, Lakshmi, Tracy, 95377 (US)
(74) Representative: Viering, Jentschura & Partner mbB Patent- und Rechtsanwälte

(57) **Abstract**

An apparatus and method for extending IO device security protocols to integrated processors. For example, an example processor package comprises: a plurality of cores to execute instructions; an interconnect fabric coupled to the plurality of cores; memory interface circuitry coupled to the interconnect fabric, the memory interface circuitry to couple the plurality of cores to one or more memories; a root complex comprising: security circuitry operable as a root of trust (RoT) and a bridge to the interconnect fabric, the security circuitry to establish secure communication with one or more Root Complex Integrated Endpoint (RCiEP) devices integral to the processor package; and a Security Protocol and Data Model (SPDM) engine of the security circuitry to provide RCiEP encryption and SPDM protocol services to establish secure communication channels with each RCiEP device.

## Description

### BACKGROUND

### Field of the Invention

This invention relates generally to the field of computer processors. More particularly, the invention relates to an apparatus and method for extending input-output (IO) device security protocols to integrated processors.

### Description of the Related Art

Confidential compute usages are becoming increasingly important. A Trusted Execution Environment (TEE) is an essential ingredient for developing and deploying confidential compute usages. The Peripheral Component Interconnect Special Interest Group has defined a Trusted Execution Elements Device Interface Security Protocol (TDISP) specification that excludes switches from the trusted computing base (TCB) of trusted virtual machines (TVMs).

TDISP standard refers to other standards combined into a framework which allows TEE Virtual Machine (TVM) be securely extended to include a PCle device interface function, referred as TEE Device Interface (TDI).

This collection of standards includes:
The DMTF SPDM standard for attestation and secure message transport, enabling the CPU host, TEE Security Manager (TSM), and Device Security Manager (DSM) to securely exchange certificates, measurements, and protocol messages necessary for establishing a secure link and binding between the TVM and DSM.

The PCle Integrity & Data Encryption (IDE) standard, which facilitates the creation of a secure, encrypted data path between the TVM and TDI over a PCle link.

The PCle TDISP standard, defining the secure protocol and security requirements for binding between the TVM and TDI.

These standards primarily address discrete devices, while acknowledging that CPU-integrated devices can also adopt these standards. This approach provides flexibility for vendors to use proprietary mechanisms for data path (link) protection and host access controls, ensuring the isolation, confidentiality, and integrity of TVMs and TDIs

Recently, Intel was requested by CSPs to enable confidential compute on CPU and its integrated (RCiEP) devices and comply with TDISP.

Although the existing CPU architectures designed for discrete devices may also be used for integrated devices, they introduce a number of security, performance and complexity and cost challenges to their existing design. In addition, the fact integrated devices are internal to the SOC package, they have some advantages over discrete devices which cannot be fully expressed with current architecture.

### BRIEF DESCRIPTION OF THE DRAWINGS

A better understanding of the present invention can be obtained from the following detailed description in conjunction with the following drawings, in which:
FIG. 1 illustrates an example computer system architecture.
FIG. 2 illustrates a processor comprising a plurality of cores.
FIG. 3A illustrates a plurality of stages of a processing pipeline.
FIG. 3B illustrates details of one embodiment of a core.
FIG. 4 illustrates execution circuitry in accordance with one embodiment.
FIG. 5 illustrates one embodiment of a register architecture.
FIG. 6 illustrates one example of an instruction format.
FIG. 7 illustrates addressing techniques in accordance with one embodiment.
FIG. 8 illustrates one embodiment of an instruction prefix.
FIGS. 9A-D illustrate embodiments of how the R, X, and B fields of the prefix are used.
FIGS. 10A-B illustrate examples of a second instruction prefix.
FIG. 11 illustrates payload bytes of one embodiment of an instruction prefix.
FIG. 12 illustrates instruction conversion and binary translation implementations.
FIG. 13 illustrates a processor architecture in accordance with some embodiments of the invention.
FIGS. 14-23 illustrate examples of an apparatus and method for extending IO device security protocols to integrated processors.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

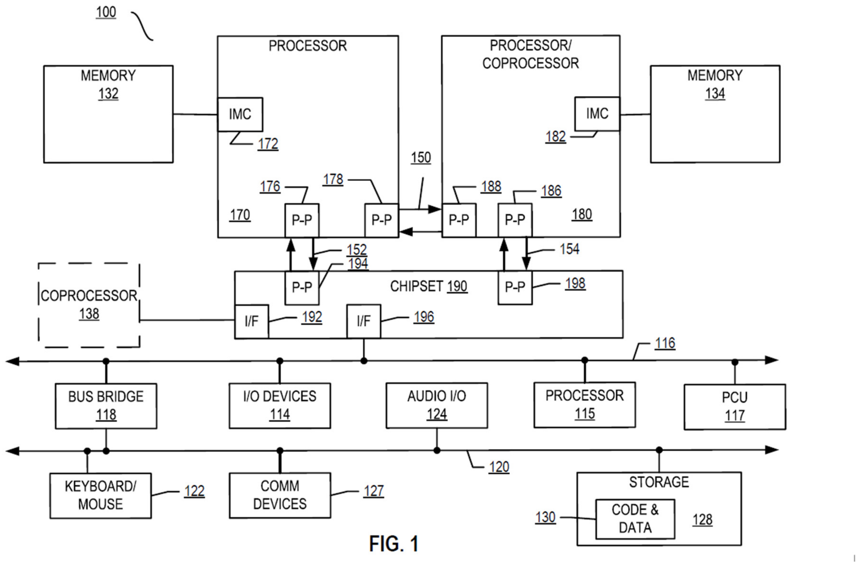

**FIG. 1** illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

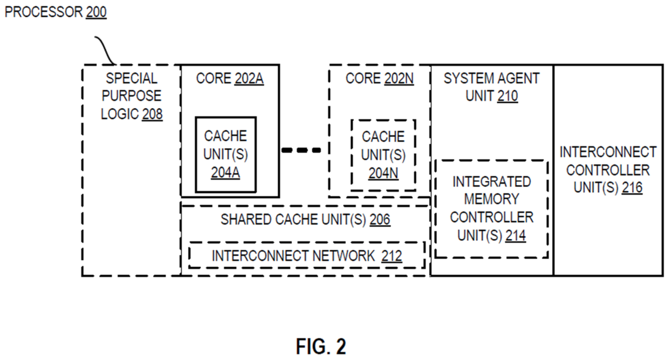

**FIG. 2** illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of **FIG. 1****.**

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

### Exemplary Core Architectures

### In-order and out-of-order core block diagram

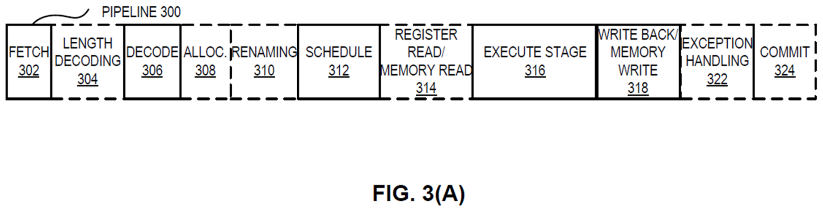

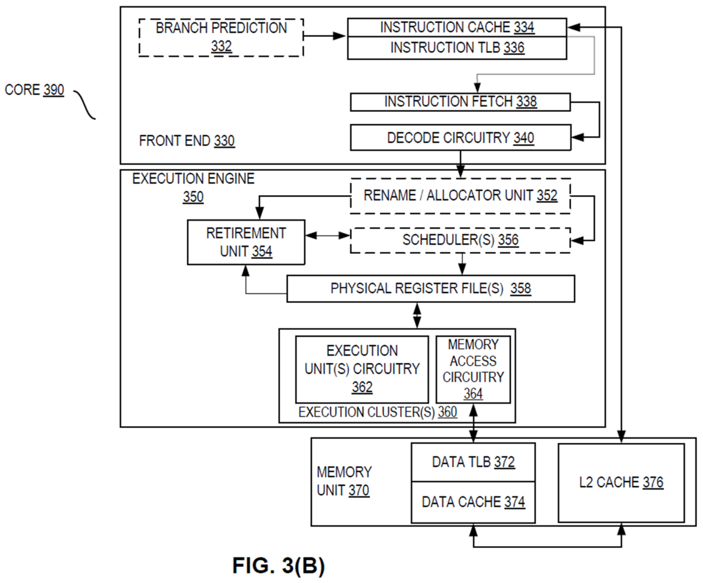

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 3(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 3(A)****,** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

### Exemplary Execution Unit(s) Circuitry

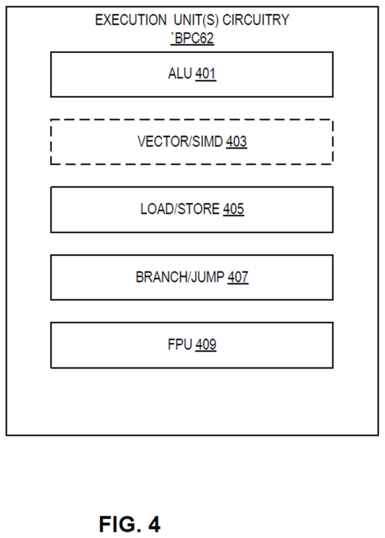

**FIG. 4** illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

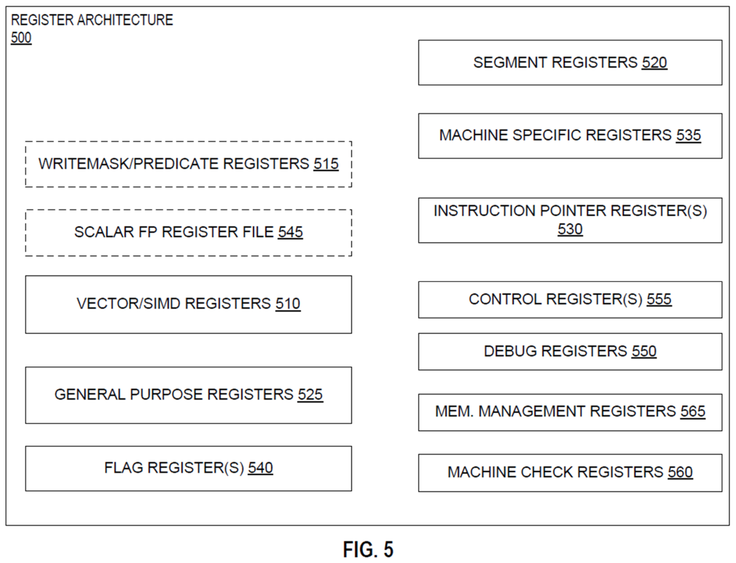

**FIG. 5** is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

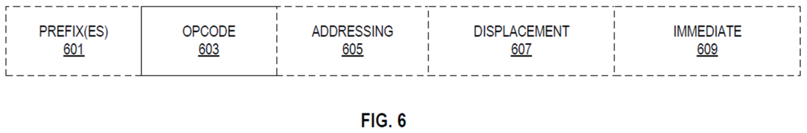

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

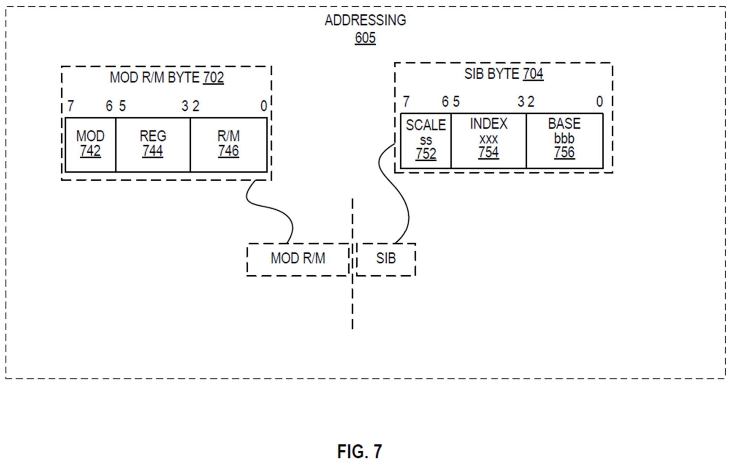

The addressing field 605 is used to address one or more operands of the instruction, such as a location in memory or one or more registers. **FIG. 7** illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

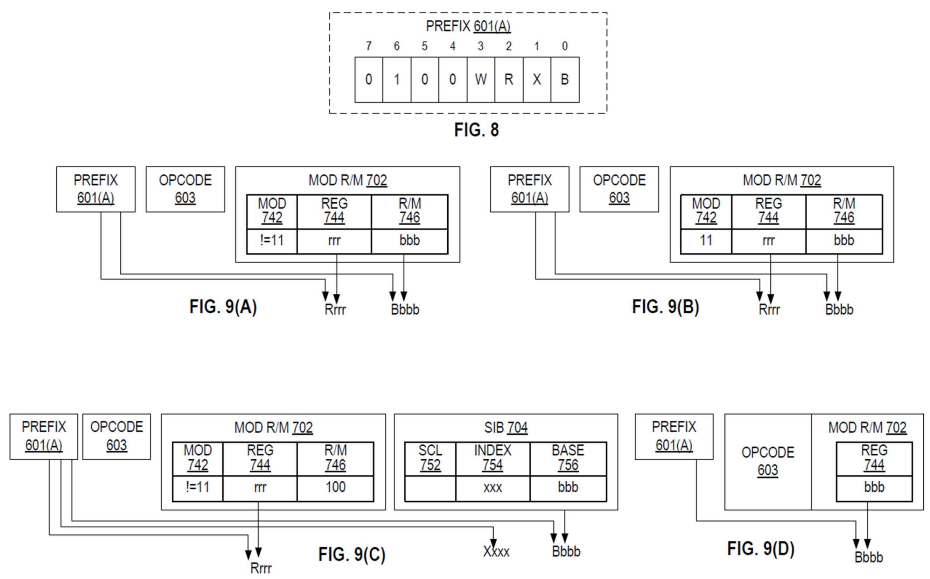

**FIG. 8** illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

**FIGS. 9(A)****-(D)** illustrate embodiments of how the R, X, and B fields of the first prefix 601(A) are used. **FIG. 9(A)** illustrates R and B from the first prefix 601(A) being used to extend the reg field 744 and R/M field 746 of the MOD R/M byte 702 when the SIB byte 7 04 is not used for memory addressing. **FIG. 9(B)** illustrates R and B from the first prefix 601(A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

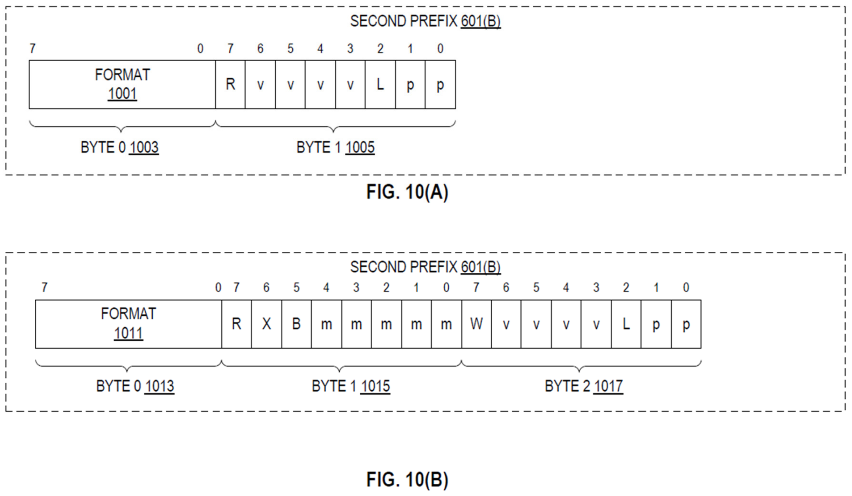

**FIGS. 10(A)****-(B)** illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

**FIG. 10(A)** illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

**FIG. 10(B)** illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

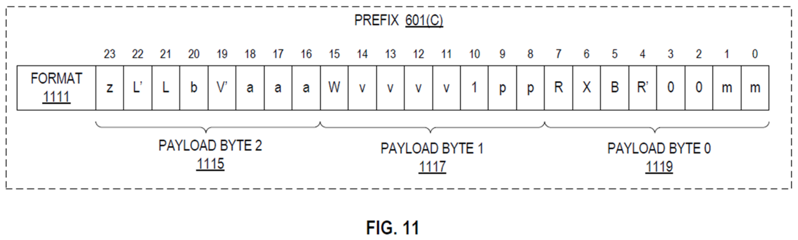

**FIG. 11** illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as **FIG. 5**) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | vvvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | vvvv | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | vvvv | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

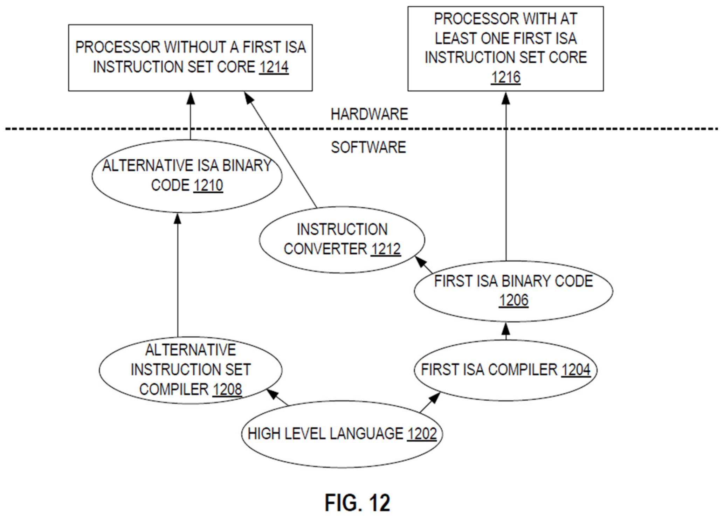

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **FIG. 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

### APPARATUS AND METHOD FOR EXTENDING INPUT-OUTPUT (IO) DEVICE SECURITY PROTOCOLS TO AN INTEGRATED PROCESSOR

Embodiments of the invention include a common Security Protocols and Data Models (SPDM) engine providing root complex Integrated Endpoint (RCiEP) encryption and SPDM protocol services required by trusted execution environment (TEE) Device Interface Security Protocol (TDISP) devices over secure SPDM bridges. The embodiments of this disclosure increase cost-effectiveness and security robustness of a processor architecture over per-RCiEP SPDM stacks. In addition, some implementations include mechanisms to provide link security and binding integrity for data paths between trusted/TEE virtual machines (TVMs) and trust domain islands (TDIs) using a non-IDE (integrity & data encryption), physically protected fabric interconnect.

Additionally, architectural circuitry and methods are described to provide selective trust compatible Address Translation Service integrity and isolation for RCiEP devices to decrease CPU complexity and are cost while improving power and performance over classical approach of access control checks using host physical address (HPA) permission tables. Certain embodiments include a TEE security manager (TSM)-controlled and TDISP-complaint host-based access control mechanism allowing RCiEP devices to access TVM memory via direct cache accesses maintaining TDISP Selective Trust security model.

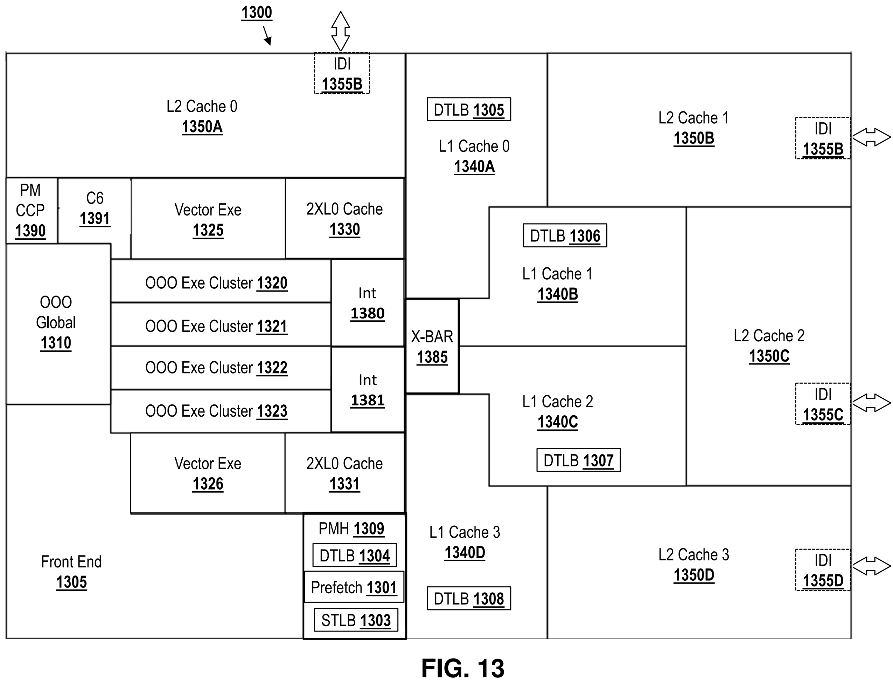

**FIG. 13** illustrates an example processor 1300 (or processor tile integrated on the processor package with other processor tiles) on which the embodiments described herein may be implemented. Four out-of-order (OOO) processing clusters 1320-1323 with out-of-order instruction processing and execution circuitry are coupled to a corresponding plurality of L1 cache slices 1340A-D via a crossbar fabric 1385 via one or more respective interfaces 1380-1381. Front end circuitry 1305 performs instruction fetching and scheduling operations to dispatch the instructions to the OOO clusters 1320-1323 and/or global OOO circuitry 1310 which maintains global ordering in operations performed by the OOO clusters 1320-1323 while executing instructions. In certain examples, the OOO clusters 1320-1323 or the front end circuitry 1305 divide an instruction stream into groups of contiguous instructions or "strands," several of which may be executed simultaneously on separate OOO clusters 1320-1323.

In the illustrated example, the processor includes a memory and cache subsystem comprising the L1 cache slices 1340A-D, as well as a set of L2 cache slices 1350A-D, which include respective in-die interconnects (IDls) 1355A-D to couple to a next level cache (e.g., an L3 cache or LLC) and/or to a memory controller coupled to a system memory, such as a DDR DRAM memory (not shown). In some implementation, each OOO execution cluster 1323 and vector execution circuit 1325-1326 includes a set of interconnects to couple the OOO execution cluster 1320-1323 to each L1 cache slice 1340A-D (e.g., via the crossbar 1385).

Some processor components use virtual memory addresses which are translated to physical memory addresses via data-side translation lookaside buffers (DTLBs) 1304-1308 and one or more second level TLBs (STLB) 1303. A page miss handler (PMH) 1309 performs page walk operations in response to TLB misses (i.e., when a required virtual-to-physical address translation is not present in one of the TLBs). In some implementations, a primary DTLB 1304 is one of five DTLBs 1304-1308 distributed throughout the processor. In particular, each L1 data cache (D$) slice 1340A-D includes a respective DTLB 1305-1308, which are synchronized with the primary DTLB 1304. For example, the PMH 1309 or other logic may perform synchronization operations in response to TLB updates and invalidations to ensure that all five DTLB 1304-1308 are coherent with each other (i.e., continually updated to store the same set of entries).

Prefetch circuitry 1301 may observe patterns in STLB 1303 hits, learn whether the pattern is sequential or irregular, and manage a pattern table to identify the irregular patterns. When the prefetch circuitry 1301 decides to prefetch a TLB entry from the STLB 1303 to the DTLB 1304, it attempts to read the entry out of the STLB, but if it is not found in the STLB 1303, then the prefetch is dropped (i.e., the prefetch circuitry 1301 does not cause additional page walk operations).

Certain types of instructions may be executed by vector execution circuits 1325-1326, which include parallel execution circuitry for performing vector or tensor operations on vectors and matrices. Vector operations may be performed, for example, to process sets of data elements packed into SIMD/vector registers (e.g., fused multiply-accumulate operations, dot-product operations, etc). Tensor operations may be performed on multi-dimensional data elements (e.g., 2D matrices) packed into tile registers (e.g., groups of vector registers) to perform matrix operations (e.g., such as matrix multiplications described herein).

The other illustrated processor blocks include a power management circuit 1390 for performing power control operations such as voltage and PLL (i.e., frequency) regulation. A C6 circuit 1391 retains the execution state associated with one or more threads, strands, or instructions when one or more of the vector execution circuits 1325-1326 or OOO clusters 1320-1323 enter into a C6 low power state.

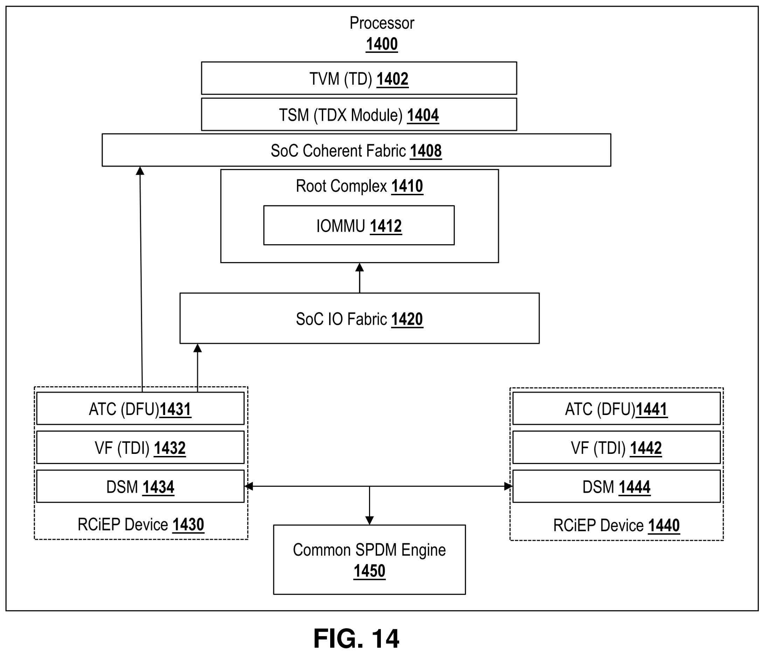

**FIG. 14** illustrates one example of a processor 1400 with a common SPDM engine 1450 providing RCiEP encryption and SPDM protocol services required by TDISP devices over secure SPDM bridges. This embodiment provides selective trust compatible Address Translation Services (ATS) 1431, 1441 and isolation for RCiEP devices 1430, 1440. Each illustrated RCiEP device 1430, 1340 also includes one or more TDI-based virtual functions (VFs) 1432, 1442 and a device security manager (DSM) 1434, 1444, described further below. A TSM 1404-controlled and TDISP-complaint host-based access control mechanism allows the RCiEP devices 1430, 1440 to access TVM memory 1402 via an SoC IO fabric 1420, SoC coherent fabric 1408, and IOMMU 1412 of a corresponding root complex 1410, while maintaining the TDISP Selective Trust security model.

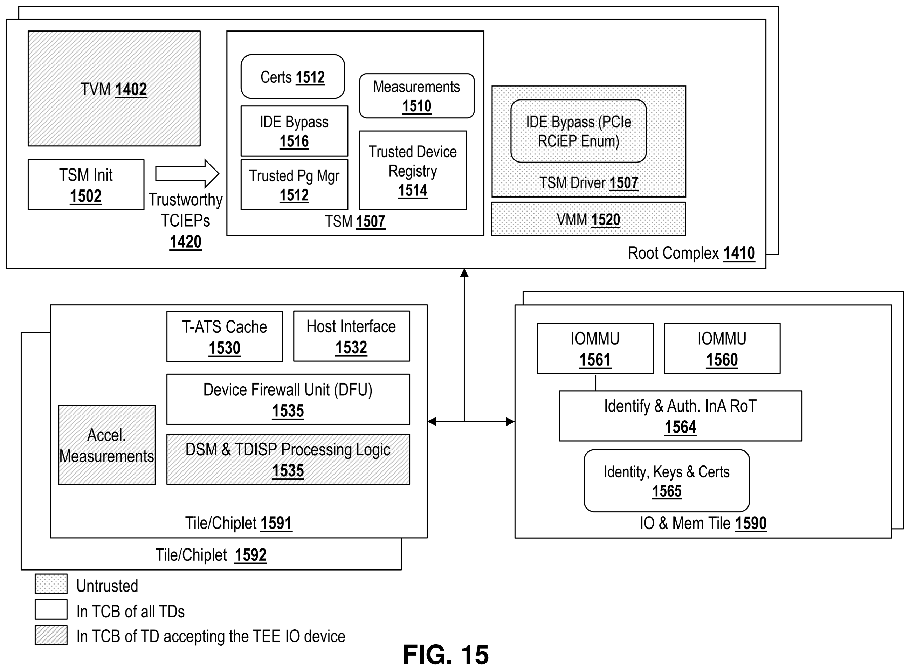

**FIG. 15** illustrates an example implementation of a system in package or system on chip including a plurality of tiles/chiplets 1591-1592, one or more IO & memory tiles 1590, and at least one root complex 1410. In some embodiments, the tiles/chiplets 1591-1592 comprise accelerators, and the root complex 1410 is integrated on a tile/chiplet with the host processing cores. Different fill patterns are used to identify components which are untrusted, those which are in the TCB of all TDs, and those which are in the TCB of a TD accepting the TEE IO device. The SOP may subdivide accelerators, cores, and IO/memory fabric across tiles/chiplets in a variety of different ways while still complying with the underlying principles of the invention.

A TEE Security Manager (TSM) 1507 (e.g., as defined by PCle SIG TDISP standard), such as a TDX-Module on IA, is a SoC Trusted entity which executes one of the cores of the processor and may include a trusted page manager 1512 for managing secure access to memory pages, a trusted device registry 1514 for registering information related to trusted devices, and integrity and data encryption (IDE) bypass logic for bypassing the IDE process under certain circumstances. The TSM 1507 also maintains various forms of authentication data including trusted device measurements 1510 and certificates 1512 (e.g., including keys for authenticating and establishing secure communication channels with the various tiles/chiplets).

A TSM driver 1507 is executed to provide a secure interface between the TSM and software components such as a VMM 1520. Trusted CPU/SoC Microcode (e.g. MCHECK on IA core) may also be executed.

A Device Security Manager (DSM) & TDISP processing logic 1535 (e.g., as defined by PCle SIG TDISP standards), provides the RCiEP's security interface using the SPDM, IDE and TDISP protocols. An Identity & Authentication root of trust (RoT) (e.g., S3M on IA core architectures) 1564 is included on the IO & memory tile 1590 and is coupled to one or more IO memory management units (IOMMUs) 1560-1561 to perform identity and authentication operations with respect to devices using various forms of identify data, keys, and certificates 1565 as described herein.

A Device Firewall Unit (DFU) 1535 is included in the TCB for all TDs and is responsible for securely hosting the Adress Translation Services (ATS) for the RCiEP and protecting the Host Physical Addresses (HPAs) and ATS from logic and access control tampering. A trusted ATS (T-ATS) cache 1530 stores recent ATS data (e.g., HPA translations) and a host interface 1532 provides access to the host processor (e.g., via the root complex 1410).

Each IOMMU 1560-1561 is responsible for managing the ATS services for both external and internal (e.g. RCiEP) devices. The IOMMU hosts multiple interfaces controlling access to/by each of the accelerators on the tiles/chiplets 1591-1592 depending on its security posture (trusted, untrusted, etc.)

### UTILIZING CPU SECURITY ENGINE AS SPDM SERVICE PROVIDER TO TDISP RCiEP DEVICES

In some embodiments, a TDISP-compliant RCiEP must implement the SPDM protocol, specifically the responder role, which enables authentication, attestation, and secure transport between the TSM and the RCiEP device DSM. Implementing SPDM introduces significant hardware and system-level costs, particularly in terms of cryptography, PKI certificates, and related algorithms.

The standard requires that every TDISP device's Device Security Manager (DSM) must support SPDM functionality, including Diffie-Hellman key exchange, measurement reporting, and secure SPDM session establishment and protocols. Typical CPU SoCs already integrate a certificate and root-of-trust security engine, such as Intel S3M, that is capable of supporting the SPDM standard.

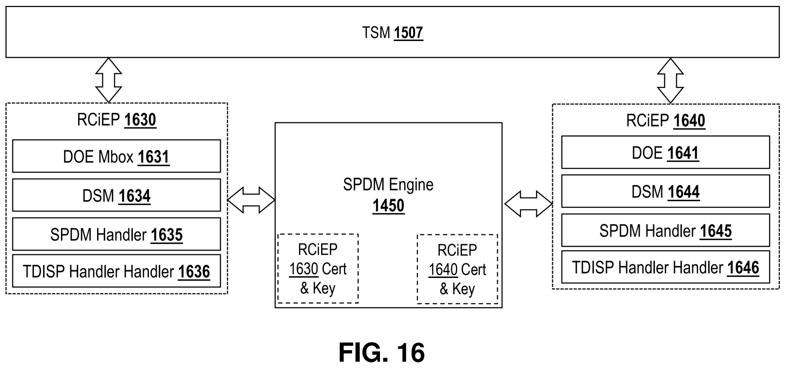

Referring to **FIG. 16****,** embodiments of the invention utilize existing CPU security protocols and data models (SPDM) security engine 1450 to reduce the cost of implementing such capability on each individual RCiEP instance 1630, 1640. A given SoC can have many types of RCiEP and instantiations of each type. SPDM requires cryptographic algorithms and public key certificate (PKI), e.g., Diffie Hellman, SHA384 which is a large impact to each RCiEP.

The SPDM security engine 1450 (e.g., Intel S3M in some implementations) can provide the SPDM services such as session establishment, DH key exchange, and attestation functionality to all RCiEP instances 1630, 1640 which are registered as TDISP-compliant in hardware design to support centralized device attestation service which externally on the TDISP interface appears as a standard per device SPDM session and capability.

To keep each RCiEP device instance TDISP compliant, each RCiEP device instance 1630, 1640 exposes a respective DOE mailbox 1631, 1641 to the platform host CPU which serves as the front-end interface for passing SPDM and TDISP messages between the TSM 1507 and each respective DSM 1634, 1644.

Upon receipt of SPDM or TDISP messages, the DSM 1634, 1644 parses the message type and handles it by its corresponding protocol handler, such as a SPDM handler 1635, 1645, and a TDISP handler 1636, 1646.

Requests/responses sent over secure SPDM sessions (and require encryption/decryption) or services from the SPDM engine 1450 (such as, for example, DH key exchange, certificate, message signing, authentication, encryption or decryption), are sent over a secure SPDM bridge to the SPDM engine 1450.

Note that each RCiEP device instance 1630, 1640 must have a unique bridge or identifier for the common SPDM engine 1450 to be able to associate it with its SPDM certificates, keys and info and session context. This may be achieved by a hardware allocation of a unique source ID or via a physical channel associated with the instance.

These embodiments enable the reduction of RCiEP cost and complexity while maintaining isolation between the RCiEP instances 1630, 1640 satisfying TDISP selective trust model. Furthermore, these solutions provide isolation between RCiEP DSM logic 1634, 1644, and the device certificates and keys, increasing overall device security.

### EMBODIMENTS TO SUPPORT TDISP RCiEP WITHOUT USING LINK ENCRYTION

According to TDISP standard, the communication between a TDISP device (TDI) and host CPU (TVM) must protect the data confidentiality, integrity and prevent replay. For discrete devices, the standard mandates using PCle IDE link encryption, however for RCiEP, the standards leave it open for CPU and RCIRP device vendors to define any other security mechanism. Using link encryption implies raising the SOC complexity, silicon area, performance and power costs of the RCiEP devices rendering their key advantages over discrete devices. RCiEP devices reside within the same SoC physical package boundary of the CPU host. Therefore, potentially, they can be excused from using encryption for data path protection if the same security properties of IDE link protection can be achieved.

### Routing integrity and data protection

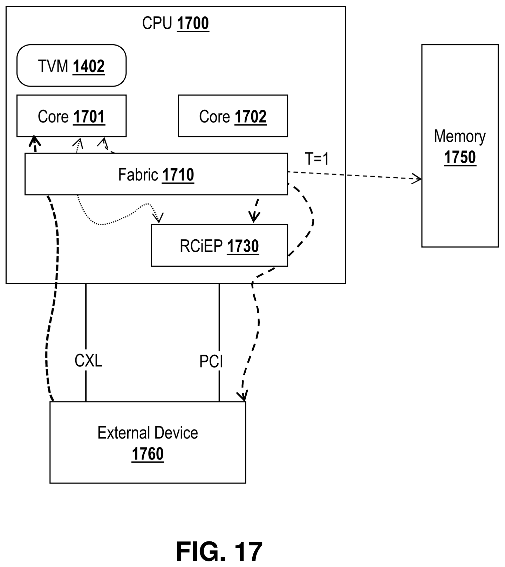

**FIG. 17** illustrates an example implementation with a CPU 1700 comprising cores 1701-1702 coupled to a memory 1750 and external device 1760 via a fabric 1710. Without IDE end-to-end protection, TDI TDISP transactions can be misrouted and either leaked outside of the packet or into a CPU or device context outside of the TEE.

In order to enforce the routing integrity, the TSM or the platform initialization firmware, which is within the TSM TCB, must lock verify the correctness of any configurable routing logic of the fabric between the RCiEP and the root complex. Such checks must be extended to converge with existing checks that verify the routing integrity between the root complex and the SOC fabric agents (e.g. cache agents, IO agents, cores, etc.).

Another issue with the RCiEP link is that the PCI-SIG TDISP defines that all the private transactions between TDI and TVM are marked with a T = 1 attribute, which is part of the IDE prefix. The standard does not define a T bit for non-IDE traffic.

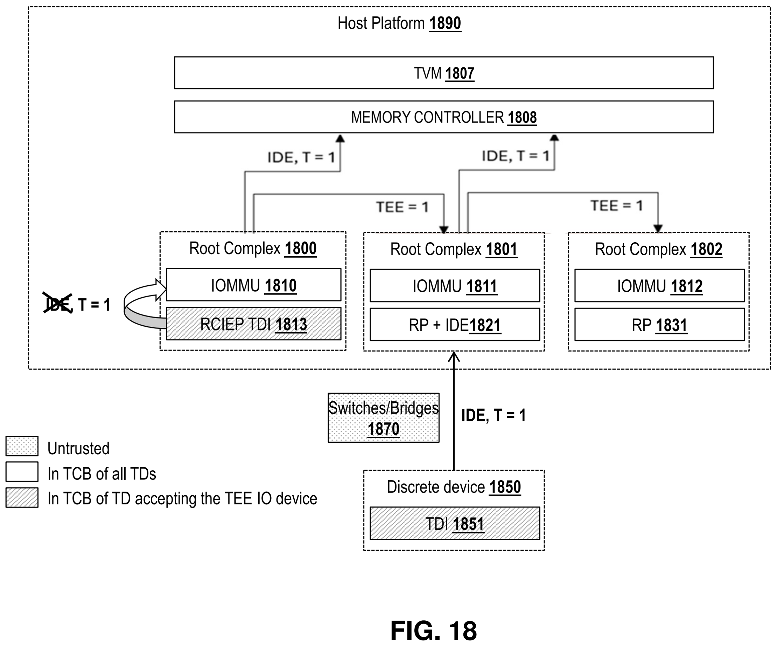

**FIG. 18** illustrates a host platform 1890 with a corresponding memory controller 1808 (e.g., for CXL.mem and/or system memory) coupled to a plurality of root complexes 1801-1802 and running a TVM 1807. Each root complex 1800-1802 includes a respective IOMMU 1810-1812 but supports different security connections. Root complex 1800 supports a RCiEP TEE device interface (TDI) 1813, root complex 1801 includes a root port (RP) with integrity and data encryption (IDE), and root complex 1802 includes a root port 1831. One or more switches/bridges 1870 couple a discrete device 1850 with a TDI 1851 to root complex 1801.

In order to minimize architectural changes, IDE-defined prefixes are used on the internal IO fabric between the RCiEP 1813 and the root complex 1800, but ignoring the other fields related to IDE and their encryption semantics. The RCiEP host root complex 1800 and IOMMU 1810 are extended to allow non-IDE usage of TLP prefixed packets as intended to be used by IDE. This is a straightforward approach which converges with existing architectures for supporting, isolating and protecting TEE transactions between discrete TDISP devices 1850 and RCiEP. With the T attribute carried by the same prefix on the IO stack between RCiEP 1813, IOMMU 1810 and root complex 1800, the architectural changes are minimized and converge with the existing architecture and design.

In a different embodiment, the T bit can be routed as an additional wire on the internal fabric from the RCiEP to the Root-Complex 1800.

### Mitigation of ID Spoofing

An additional problem addressed by some embodiments of the invention without IDE is related to preventing devices from impersonating other devices by spoofing the requestor ID (RID). RID spoofing can also be the result of the VMM sending a config cycle to a benign TDI, which according to the PCIe specification, shall assume the new ID. ID spoofing can allow the device function (TDISP or non-TDISP) to gain access to the impersonated TDI ID resources, specifically, its TVM private memory or MMIO of peer TDI devices.

With IDE, this problem is mitigated by each device being assigned a distinct Requestor ID (RID) range by the TSM, which verifies that this range does not intersect with any other IDE on the platform and the RP IDE engine verifying that the request RID matches the IDE stream-programmed RID range. A malicious device cannot simply spoof the RID without being detected by the host root port due to either RID mismatches or due to IDE cryptographic authentication. Without IDE, any device sharing the same root complex hosting the RCiEP may send requests with a fake ID impersonating a victim TDI to gain access to its private TVM resources.

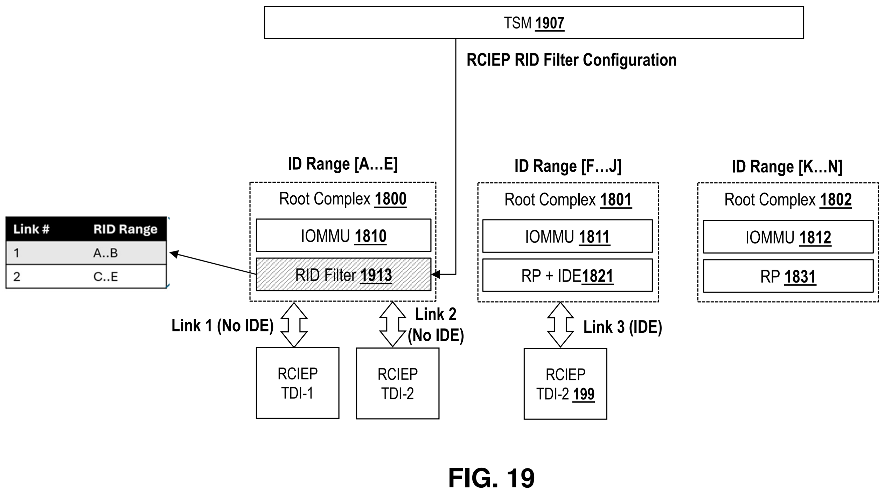

**FIG. 19** illustrates an example implementation which resolves these problems. Each root complex 1800-1802 is associated with a particular ID range (e.g., A-E, F-J, and K-N, respectively). In particular, each root complex with RCiEP TDISP device capability supports a TSM-programmable per link RID filter 1913, which performs filtering based on the assigned ID range. In the illustrated example, root complex 1800 is associated with range A-E which is further subdivided into link 1, which supports RID range A-B, and link 2, which supports RID range C-E. In one embodiment, the TSM 1907 programs the RID ranges like the IDE RID range programming on a PCIe RP with IDE-ECAP. In this embodiment, the root complex 1800 verifies the RID of a request received on each link and matches the RID filter range programmed by the TSM 1907.

### Mitigation of TDISP Session Hijack

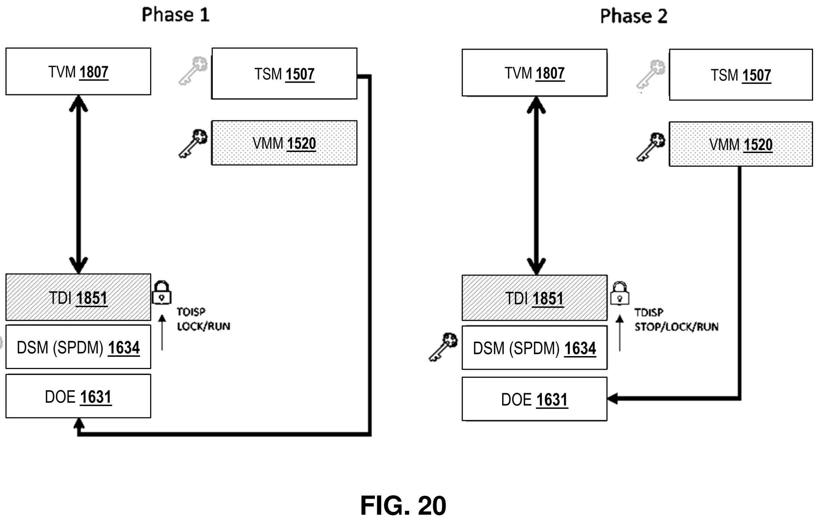

Another attack vector which IDE resolves is illustrated in **FIG. 20****.** In Phase 1, the TSM 1507 establishes an SPDM session with the RCiEP DSM 1634 and uses a secure SPDM session to bind its TDI 1851 to a TVM 1807. In Phase 2, a malicious VMM 1520 establishes an additional SPDM session or re-establishes the existing one (impersonating the TSM 1507) and taking over TDI 1851 by sending TDISP messages that appear to be coming from the TSM 1507.

This attack is mitigated when using IDE (with discrete devices) because the SPDM session is bound to the IDE key exchange operation and the TSM is the only one capable of programming the host Root Port IDE keys. Therefore, hijacking the SPDM session by the VMM will not allow establishment of a device connection, leading to denial of service.

Embodiments of the invention provide a solution for this attack. When IDE is not used, for a RCiEP device, the DSM of the RCiEP device will expose a protected register TDISP_SPDM_SESSION_ID that only the TSM can configure. The DSM will only accept TDISP messages sent over SPDM with matching session ID. To prevent re-establishing the session ID by the malicious VMM, the DSM will reset and invalidate TDISP_SPDM_SESSION_ID upon any event of disabling the SPDM session or on device reset (e.g. PF FLR).

### EFFICIENT TRANLATED REQUEST ACCESS CONTORL USING DEVICE FIREWALL UNIT

Embodiments of the invention provide techniques for enforcing access control to host memory, as required by the TDISP Selective Trust model, for a RCiEP device which operates with enabled PCIe Address Translation Service extended capability.

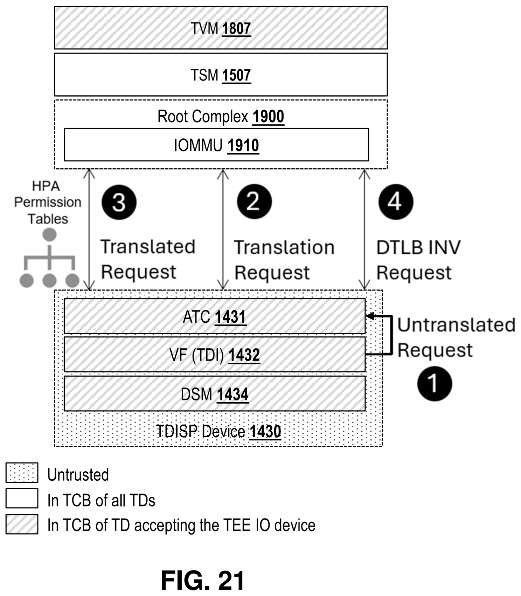

Referring to **FIG. 21****,** the PCIe address translation service (ATS) 1431 provides mechanisms for a device to:
(1) Send a PCIe translation request to the host root complex asking to translate a host virtual address to a host physical address (HPA).
(2) Cache the translation in the device translation look-aside buffer (DTLB)
(3) On a DTLB hit, send a translated request (using the HPA address), skipping root complex translation latencies.
(4) Respond to host DTLB invalidation requests, allowing the host to modify and synchronize host virtual address mappings and permissions.

Note that there is no mechanism to enforce the synchronization between host managed permissions, and the device and the protocol assumes the device operates with integrity with respect to Permission Provisioning (i.e., the device shall not access HPA unless it was delivered by the host as a result of a translation request) and Permission Freshness (i.e., the device shall act with integrity and invalidate its DTLB from stale translation upon receival of DTLB invalidation request from the host).

These assumptions do not apply to the TDISP selective trust model which cannot assume devices are trusted by all TVMs running on the platform. For example, a TVM may be manipulated to accept a malicious TDI which ignores the security requirements and simply accesses any other TVM to corrupt or leak its secrets.

Therefore, the standard requires a host access control mechanism (such as the HPA permission table in **FIG. 21**) to ensure TDI device access is restricted to the TVM memory it is bound with, and it's the responsibility of the TSM to program such access control mechanisms.

RCiEP devices are designed to have low latency, low complexity and power efficiency compared to discrete devices. Sometimes, they are built with direct channels to the CPU caches, bypassing the root complex and PCI strict ordering rules to gain more performance and power advantages.

Adding HPA access control tables can increase latency, power and complexity of the RCiEP devices, rendering their usage for confidential compute obsolete or impractical. Having no access control at all breaks the TDISP trust model and increases the TCB of TVMs with the integrated device hardware and firmware stack. This stack is sometimes under the control of a malicious VMM or TVM.

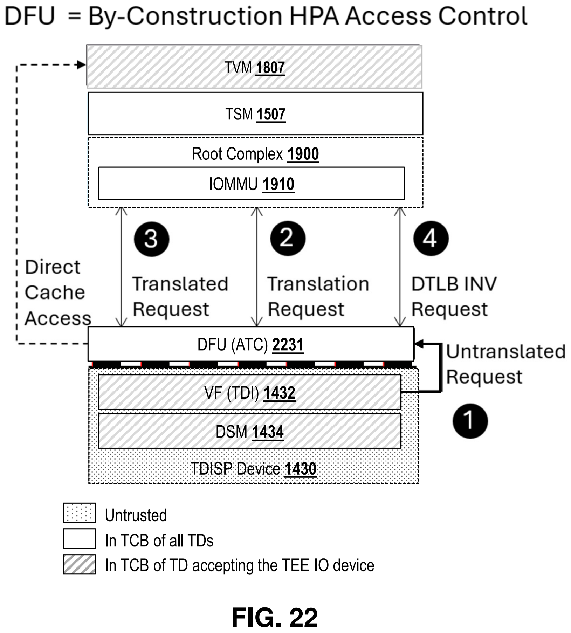

Referring to **FIG. 22****,** embodiments of the invention address this problem and propose a simple but effective architecture and mechanism called device firewall unit (DFU) 2231. The DFU 2231 provides a "by-construction" access control mechanism which offers zero complexity, zero latency and zero power overhead to RCiEP devices. First, note that RCiEP resides on the same package of the root complex 1900 and the IOMMU 1910 which provides page translation services to the ATS PCIe device. A DFU 2231 is an isolated unit from the device which provides the DTLB and ATC (Address Translation Cache) functionalities to a single or multiple devices.

In some embodiments, the DFU 2231 is an immutable hardware unit, detached from the RCiEP which provides address translation caching and services with the following security properties:
(1) Proxy: Any device 1430 access to host is proxied by the DFU 2231
(2) Encapsulation: The DFU 2231 only permits device 1430 access to HPA in ATC (hit).
(3) Provisioning: To ensure any TDI HPA access was given permissions from the TSM, the DFU 2231 sends a translation request upon an ATC miss, which results with IOMMU 1910 translation completion with the correct private HPA, and permissions as programmed by TSM in the IOMMU 1910 trusted page tables. This means the address permissions are provisioned to the DFU 2231 by the TSM 1507 and cannot be faked by a malicious or a buggy RCiEP device.
(4) Invalidating: When address permissions given to a TDI need to be revoked, the TSM 1507 must be able to ensure the TDI 1435 can no longer have access. To address that, the DFU 2231 complies with the IOMMU DTLB invalidation request and only reports back with DTLB invalidation completion after the ATC invalidation and request pipe draining (completion sent with integrity).

The DFU 2231 thus acts as a firewall between device 1430 and host data fabric. Being an immutable, common and well-defined component, it is much more robust and simpler to prove, and security validate. And finally, as a reusable IP block, it has the potential of reducing design and security assurance costs.

To maintain isolation of physical address access, some embodiments of the DFU 2231 contain an ATS Address Translation Cache (ATC) that contains the virtual to physical address mappings (ATS Entries) mapped to the corresponding Requestor ID and PASID. The DFU 2231 also contains the ATS control and status registers. Isolating this functionality and the ATS protocols and state machine mechanisms that manage the addition and invalidation of ATS entries into the ATC is intended to ensure that the device 1430 cannot tamper with the physical address access control mechanisms.

The device 1430 operates in the virtual address domain only and sends all IO requests thru the DFU as an Untranslated Requests. The DFU receives Untranslated Requests from the Device and can send Translated and Untranslated Requests to the host. The device can indicate which type of transaction to send in the header of the request: Translated or Untranslated.

The DFU 2231 implements the ATS protocols and logic and manages the ATC. If there is an ATC hit, the DFU 2231 will perform the address translation and send the request to the host. If there is an ATC miss the DFU 2231 will send a translation request to the host and wait for a translation completion to get the address. The DFU 2231 performs the ATS flow in a way that cannot be tampered with by the main part of the device.

### Completion Checker

To extend the protection and prevent a malicious or confused device from injecting unsolicited and spoofed completions, the DFU 2231 can track incoming requests in a DFU-contained request tracking logic that cannot be accessed by the main portion of the device. When the device 1430 sends completion packets, the DFU 2231 interrogates the tracker and verify that there is a corresponding request that matches the completion (Requestor ID and Tag) before sending the completion. If there is no corresponding request in the tracker, the DFU 2231 will drop the completion. If there is a corresponding request found in the tracker, the DFU 2231 will send the completion and remove the tracking entry from the tracker.

### Requestor ID Checker

The Requestor ID checker checks the Requestor ID field in untranslated requests to ensure they are not being spoofed by the device 1430. All untranslated requests have their Requestor ID checked against the DFU's 2231's copy that is programmed using a type 0 configuration request.

Additionally, untrusted software, e.g., BIOS/OS/VMM, can maliciously tamper and reset the device's Requestor ID to a value of its choosing by sending a type 0 configuration request. As a mitigation, the DFU 2231 shall include an ID filter register, configurable only by the TSM 1507. The DFU 2231 blocks any configuration requests if it falls outside the ID filter range.

### ACCESS CONTROL FOR TDISP RCiEP COHERENT MEMORY (.CACHE) ACCESS

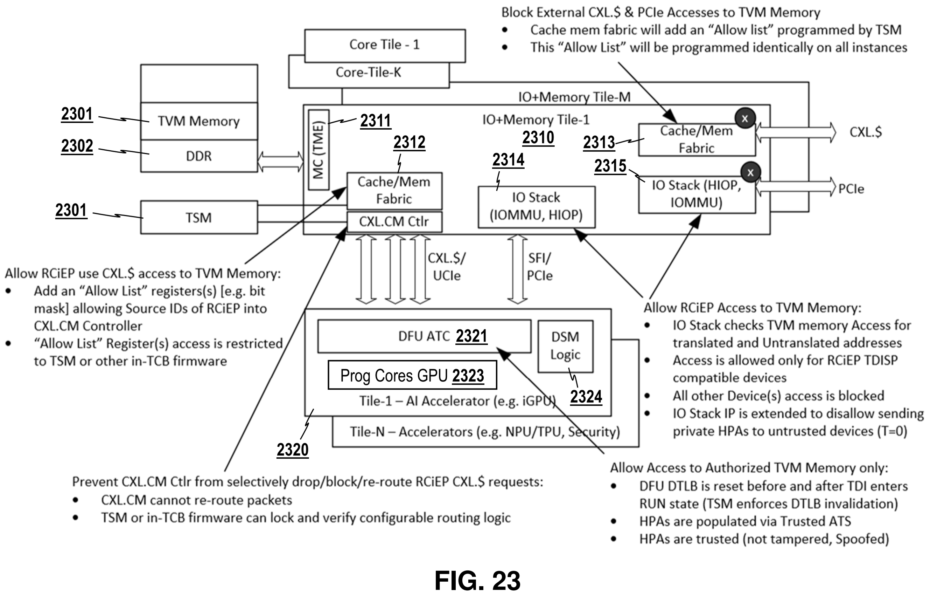

Access control mechanisms for TDISP RCiEP coherent memory (.cache) access will be described with respect to **FIG. 23****,** which illustrates an embodiment including a TSM 2303, and DDR memory 2302 including a TVM memory 2301 (e.g., a TVM address space) coupled to IO memory tile 2310. In the illustrated embodiment, the IO memory tile includes a memory controller 2311 to couple to the DDR memory 2302 and TVM memory 2301, cache/memory fabrics 2312 -2313 for coupling to different memory links (e.g., CXL links), IO stacks 2314-2315 for communication over IO links (e.g. SFO/PCle links). AI accelerator tiles 2320 with programmable GPU cores 2323 and DSM logic 2324 also include a DFU 2321 with an address translation cache (ATC).

RCiEP devices can use direct coherent fabric access for improved memory performance in addition to using the PCIe interface. The coherent interface uses physical addressing and requires the device 2320 to implement Address Translation Service (ATS) and an Address Translation Cache (ATC) (e.g., DFU ATC 2321). The device 2320 can request address translations over the PCIe interface for use on the coherent interface (e.g., from the IOMMU of the IO stack 2314). In some implementations, the coherent path only uses a Host Physical Address (HPA) as the target. This means that, without an access control mechanism, any device (TDISP or non-TDISP) can access private memory of any TVM 2301 and break TEE security. Some embodiments control direct access of RCiEP devices to coherent memory fabric 2312 using a filtering mechanism in the caching agent gate between all devices 2320 and the coherent fabric 2312. This filter mechanism will allow the TSM 2301 (only) to control which devices 2320 (e.g., identified via a channel and source ID) can access which TVM memory 2301 (e.g., based on the HPA key ID or privacy bit).

The access permissions can dynamically be controlled by the TSM 2301 at the device level and at the sub device level. Device level access can be enforced by implementing a device access list that specifies which RCiEP devices can access private memory (for T=1 transactions). For example, a per channel "Allow List" bitmap may be implemented in hardware in the IO Caching Agent or at a similar point in the IO stack 2314 which can intercept all transactions from the RCiEP (e.g., devices 2320) to coherent memory (e.g., DDR 2302 via the cache/memory fabric 2312). The ID used to identify the RCiEP device 2320 may be immutable from change from any untrusted component. The Allow List bitmap or other logic only allows the transaction to access private memory when the immutable hardware ID is on the Allow List and T =1.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

### EXAMPLES

The following are example implementations of different embodiments of the invention.

Example 1. A processor package, comprising: a plurality of cores to execute instructions; an interconnect fabric coupled to the plurality of cores; memory interface circuitry coupled to the interconnect fabric, the memory interface circuitry to couple the plurality of cores to one or more memories; a root complex comprising: security circuitry operable as a root of trust (RoT) and a bridge to the interconnect fabric, the security circuitry to establish secure communication with one or more Root Complex Integrated Endpoint (RCiEP) devices integral to the processor package; and a Security Protocol and Data Model (SPDM) engine of the security circuitry to provide RCiEP encryption and SPDM protocol services to establish secure communication channels with each RCiEP device.

Example 2. The processor package of example 1, wherein the root complex further comprises: an input-output memory management unit (IOMMU) integral to the root complex, the IOMMU to provide a host physical address (HPA) to an RCiEP device responsive to an address translation request, the RCiEP device to use the HPA to access a corresponding region of the one or more memories.

Example 3. The processor package of example 1 or 2, wherein the security circuitry is operable to verify that the RCiEP device is permitted to access the corresponding region of the one or more memories.

Example 4. The processor package of any of examples 1-3, wherein the RCiEP device is bound to a trusted virtual machine (TVM), wherein the security circuitry is operable to ensure that the corresponding region of the one or more memories is associated with the TVM.

Example 5. The processor package of example 1-4, wherein each RCiEP device includes or is associated with a data object exchange (DOE) mailbox to be exposed to the security circuitry, the DOE mailbox comprising an interface for passing messages between a trusted execution environment (TEE) security manager associated with the TVM and a device security manager (DSM) associated with the RCiEP device.

Example 6. The processor package of example 1-5, wherein the messages comprise Security Protocol and Data Mode (SPDM) messages and TEE Device Interface Security Protocol (TDISP) messages.

Example 7. The processor package of example 1-6, wherein the RCiEP device comprises an address translation services (ATS) cache to store the HPA provided by the IOMMU.

Example 8. The processor package of example 1-7, wherein the security circuitry comprises: a device firewall unit to be shared by the one or more RCiEP devices, the DFU to manage a data translation lookaside buffer (DTLB) and/or address translation cache (ATC) to store translated HPA's on behalf of the one or more RCiEP devices.

Example 9. The processor package of example 1-8, wherein the DFU is to service all memory access requests from the one or more RCiEP devices, including requesting translations to HPAs from the IOMMU, checking corresponding permissions, and storing the translations in the DTLB and/or ATC.

Example 10. The processor package of example 1-9, wherein the corresponding permissions are provided to the DFU from the TEE security manager associated with the TVM.

Example 11. The processor package of example 1-10, wherein the DFU comprises request tracking logic with a tracker structure to track requests generated by the one or more RCiEP devices, wherein when an RCiEP device sends a completion packet, the DFU is to interrogate the tracker structure and verify that there is a corresponding request that matches the completion before sending the completion.

Example 12. The processor package of example 1-11, wherein the corresponding request is identified with a unique identifier comprising a requestor ID and/or a tag value.

Example 13. The processor package of example 1-12, wherein at least a portion of the interconnect fabric comprises a coherent fabric, the processor package further comprising a caching subsystem including a caching agent associated with at least one cache memory, the caching agent comprising filtering logic to filter requests from the one or more RCiEP devices to the coherent fabric.

Example 14. The processor package of example 1-13, wherein the filtering logic is configurable by the TSM to control which of the one or more RCiEP devices can access which TVM memory space.

Example 15. The processor package of example 1-14, wherein the control is to be performed based on a host physical address (HPA) key ID or a privacy bit.

Example 16. The processor package of example 1-15, further comprising a plurality of chiplets integrated on a package substrate.

Example 17. The processor package of example 1-16, wherein the plurality of cores are integral to a first chiplet of the plurality of chiplets and at least one of the interconnect fabric, memory interface, and root complex are integral to a second chiplet of the plurality of chiplets.

In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware.

Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

## Claims

1. A processor package, comprising:
a plurality of cores to execute instructions;
an interconnect fabric coupled to the plurality of cores;
memory interface circuitry coupled to the interconnect fabric, the memory interface circuitry to couple the plurality of cores to one or more memories;
a root complex comprising:
security circuitry operable as a root of trust (RoT) and a bridge to the interconnect fabric, the security circuitry to establish secure communication with one or more Root Complex Integrated Endpoint (RCiEP) devices integral to the processor package; and
a Security Protocol and Data Model (SPDM) engine of the security circuitry to provide RCiEP encryption and SPDM protocol services to establish secure communication channels with each RCiEP device of the one or more RCiEP devices.

2. The processor package of claim 1, wherein the root complex further comprises:
an input-output memory management unit (IOMMU) integral to the root complex, the IOMMU to provide a host physical address (HPA) to an RCiEP device of the one or more RCiEP devices responsive to an address translation request, the RCiEP device to use the HPA to access a corresponding region of the one or more memories.

3. The processor package of claim 2, wherein the security circuitry is operable to verify that the RCiEP device is permitted to access the corresponding region of the one or more memories.

4. The processor package of claim 3, wherein the RCiEP device is bound to a trusted virtual machine (TVM), wherein the security circuitry is operable to ensure that the corresponding region of the one or more memories is associated with the TVM.

5. The processor package of claim 4, wherein the RCiEP device includes or is associated with a data object exchange (DOE) mailbox to be exposed to the security circuitry, the DOE mailbox comprising an interface for passing messages between a trusted execution environment (TEE) security manager associated with the TVM and a device security manager (DSM) associated with the RCiEP device.

6. The processor package of claim 5, wherein the messages comprise Security Protocol and Data Mode (SPDM) messages and TEE Device Interface Security Protocol (TDISP) messages.

7. The processor package of claim 6, wherein the RCiEP device comprises an address translation services (ATS) cache to store the HPA provided by the IOMMU.

8. The processor package of any of claims 1 to 7, wherein the security circuitry comprises:
a device firewall unit to be shared by the one or more RCiEP devices, the DFU to manage a data translation lookaside buffer (DTLB) and/or address translation cache (ATC) to store translated host physical addresses (HPAs) on behalf of the one or more RCiEP devices.

9. The processor package of claim 8, wherein the DFU is to service all memory access requests from the one or more RCiEP devices, including requesting translations to HPAs from an input-output memory management unit (IOMMU) integral to the root complex, checking corresponding permissions, and storing the translations in the DTLB and/or ATC.

10. The processor package of claim 9, wherein corresponding permissions for an RCiEP device of the one or more RCiEP devices are provided to the DFU from a TEE security manager associated with a trusted virtual machine (TVM) wherein the RCiEP device is bound to the TVM.

11. The processor package of any of claims 7 to 10, wherein the DFU comprises request tracking logic with a tracker structure to track requests generated by the one or more RCiEP devices, wherein when an RCiEP device sends a completion packet, the DFU is to verify, based on the tracker structure that there is a corresponding request that matches data in the completion packet before sending the completion packet.

12. The processor package of claim 11, wherein the corresponding request is identified with a unique identifier comprising a requestor ID or a tag value.

13. The processor package of any of claims 7 to 12, wherein at least a portion of the interconnect fabric comprises a coherent fabric, the processor package further comprising a caching subsystem including a caching agent associated with at least one cache memory, the caching agent comprising filtering logic to filter requests from the one or more RCiEP devices to the coherent fabric.

14. The processor package of claim 13, wherein the filtering logic is configurable by the security circuitry to control which of the one or more RCiEP devices can access which trusted virtual machine (TVM) memory space.

15. The processor package of claim 14, wherein the control is to be performed based on a host physical address (HPA) key ID or a privacy bit.
